# EUROPÄISCHE PATENTSCHRIFT

(11) **EP 3 135 522 B1**
(45) Veröffentlichungstag und Bekanntmachung des Hinweises auf die Patenterteilung: **01.04.2020**
(21) Anmeldenummer: 16187598.4
(22) Anmeldetag: 29.11.2011
(51) Int. Cl.: B60K 6/48, B60K 6/383

(54) **HYBRIDMODUL UND VERFAHREN ZUM ÜBERTRAGEN EINES DREHMEMENTES IN EINEM TRIEBSTRANG EINES KRAFTFAHRZEUGES**
HYBRID MODULE AND METHOD FOR TRANSMITTING TORQUE IN A DRIVE TRAIN OF A MOTOR VEHICLE
MODULE HYBRIDE ET PROCÉDÉ PERMETTANT LA TRANSMISSION D'UN COUPLE DANS UNE CHAÎNE CINÉMATIQUE D'UN VÉHICULE AUTOMOBILE

(30) Priorität: 21.12.2010 DE 102010055275
(43) Veröffentlichungstag der Anmeldung: 01.03.2017
(62) Teilanmeldung aus: 11831796.5
(73) Patentinhaber: Schaeffler Technologies AG & Co. KG, 91074 Herzogenaurach (DE)
(72) Erfinder: Reitz, Dierk, 76534 Baden-Baden (DE); Ruder, Willi, 77933 Lahr (DE); Schneider, Matthias, 77880 Sasbach (DE)

(56) Entgegenhaltungen:
- EP-A1- 2 050 608
- JP-A- 2008 126 703
- US-A1- 2009 166 109
- US-A1- 2010 087 290
- US-A1- 2010 314 185

## Beschreibung

Die vorliegende Erfindung betrifft ein Hybridmodul für einen Antriebsstrang eines Fahrzeuges mit Verbrennungsmotor und Getriebe.

Aus der DE 100 36 504 A1 ist ein Hybridantriebsstrang eines Kraftfahrzeuges bekannt, welcher einen Verbrennungsmotor, ein Zweimassenschwungrad, einen elektrischen Antrieb und ein Getriebe umfasst, wobei eine erste Trennkupplung zwischen Verbrennungsmotor und elektrischen Antrieb und eine weitere Trennkupplung zwischen elektrischem Antrieb und Getriebe angeordnet sind. Die motorseitig angeordnete erste Trennkupplung dient dazu, den Verbrennungsmotor vom restlichen Antriebsstrang abzukoppeln, um z. B. mit dem Fahrzeug rein elektrisch zu fahren. Die getriebeseitig angeordnete zweite Trennkupplung dient dazu, den Verbrennungsmotor über den elektrischen Antrieb zu starten und während dieses Startvorganges das Getriebe abzukoppeln. Der elektrische Antrieb und die beiden Trennkupplungen können aus Bauraumgründen axial und radial überlagert werden, wie in Figur 2 der DE 100 36 504 A1 gezeigt, indem die erste Trennkupplung in den Rotor des elektrischen Antriebes integriert wird. Diese aus bauraumtechnischen Gründen zumeist notwendige Integration der motorseitig angeordneten Trennkupplung in den Rotor der Elektromaschine führt jedoch zu vergleichsweise geringen Reibradien. Aufgrund dieser geringeren Reibradien sinkt aber das übertragbare Moment ab.

Aus jeder der JP 2008 126703 A, der US 2010/314185 A1, der US 2010/087290 A1, der EP 2 050 608 A1 und der US 2009/166109 A1 sind ein Hybridmodul gemäß dem Oberbegriff des Anspruchs 1 und ein Verfahren gemäß dem Oberbegriff des Anspruchs 18 bekannt.

Es ist daher eine Aufgabe der vorliegenden Erfindung, das durch das Hybridmodul der Eingangs genannten Art übertragbare Moment zu erhöhen bei im Wesentlichen gleichbleibendem Bauraumbedarf.

Diese Aufgabe wird mit den in den unabhängigen Ansprüchen angegebenen Maßnahmen gelöst.

Ein Hybridmodul für einen Triebstrang eines Fahrzeuges mit Verbrennungsmotor und Getriebe ist zwischen Verbrennungsmotor und Getriebe wirksam und weist einen elektrischen Antrieb, eine Trennkupplung und einen Freilauf auf, wobei die Trennkupplung und der Freilauf parallel zueinander jeweils zur Drehmomentübertragung von Verbrennungsmotor in Richtung Getriebe vorgesehen sind, der Freilauf vom Verbrennungsmotor kommendes Drehmoment in Richtung Getriebe überträgt und bei entgegengesetzt gerichtetem Drehmoment öffnet, und ein vom Freilauf übertragener Anteil am vom Verbrennungsmotor erzeugten Drehmoment durch Einstellung eines von der Trennkupplung übertragbaren Drehmomentes einstellbar ist, so dass das Fahrzeug wahlweise durch den Verbrennungsmotor oder den elektrischen Antrieb oder kombiniert gleichzeitig durch beide antreibbar ist.

Es wird also die Funktion der aus dem Stand der Technik bekannten motorseitigen Trennkupplung auf zwei im Drehmomentenfluss parallel zueinander angeordnete Bauteile, nämlich eine Trennkupplung und einen Freilauf aufgeteilt. Bei offener Trennkupplung wird das gesamte vom Verbrennungsmotor erzeugte Drehmoment über den Freilauf an das Getriebe übermittelt. Der Freilauf sollte dementsprechend so ausgelegt werden, dass dessen übertragbares Drehmoment dem vom Verbrennungsmotor erzeugbaren Drehmoment entspricht. Die Drehmomentenübertragungskapazität der Trennkupplung kann im erfindungsgemäßen Hybridmodul demgegenüber deutlich niedriger als das vom Verbrennungsmotor erzeugbare Drehmoment gewählt werden. Beispielsweise kann bei einem vom Verbrennungsmotor erzeugbaren Drehmoment von 700 bis 800 Nm die Trennkupplung auf 100 Nm bis 130 Nm ausgelegt werden, wohingegen der Freilauf auch auf 700 Nm bis 800 Nm ausgelegt sein sollte. Wird die Trennkupplung teilweise geschlossen, so wird entsprechend dem von der Trennkupplung übertragbaren Drehmoment das durch den Freilauf übertragene Drehmoment verringert. Mit anderen Worten teilt sich das vom Verbrennungsmotor insgesamt erzeugte Drehmoment auf den Freilauf und auf die Trennkupplung auf, entsprechend dem von der Trennkupplung übertragenen Drehmoment (was wiederum von einer Betätigungskraft der Trennkupplung abhängt).

Dabei kann die Trennkupplung im verbrennungsmotorischen Betrieb des vorliegenden Triebstranges geschlossen bleiben bzw. geschlossen gehalten werden, so dass als Regelfall eine Drehmomentenaufteilung auf Kupplung und Freilauf erfolgt. Unter Umständen kann es hierbei allerdings vorteilhaft sein, im verbrennungsmotorischen Betrieb die Kupplung zumindest zum Teil zu öffnen bzw. geöffnet zu halten, z.B. bei Zug-Hoch-Schaltungen oder bei Schub-Hoch-Schaltungen.

Mit der Trennkupplung kann Drehmoment in Richtung Verbrennungsmotor übertragen werden (der Freilauf öffnet in dieser Übertragungsrichtung des Drehmomentes). Dementsprechend sind bei geschlossener Trennkupplung ein Anschleppen des Verbrennungsmotors aus dem elektrischen Fahren (beispielsweise bei 80 bis 130 Nm) sowie ein Übertragen eines Schubmomentes im Falle einer Batterie mit vollem Ladezustand (beispielsweise bis zum 90 Nm) realisierbar.

Das Hybridmodul umfasst daher wie vorstehend beschrieben parallel zueinander geschaltet Trennkupplung und Freilauf, wobei das Drehmoment des Verbrenners in Richtung Triebstrang ausschließlich vom Freilauf, oder von Freilauf und Trennkupplung gemeinsam, oder ggf. ausschließlich über die Trennkupplung übertragen werden kann. Zudem werden vom Triebstrang in Richtung Verbrennungsmotor gerichtete Drehmomente ausschließlich über die Trennkupplung übertragen.

Vorteilhafterweise ist die Trennkupplung als "normally open" Kupplung ausgebildet, also im Grundzustand offen ausgebildet, und wird über eine Schließkraft zugezogen bzw. zugedrückt. Dies ist insoweit vorteilhaft, als die Kupplung im vorliegenden Triebstrang bei üblicher Betriebsweise eines mit einem solchen Hybridmodul ausgestatteten Fahrzeuges zu 70% offen ist. Der Wirkungsgrad des Aktors ist dementsprechend unter solchen Randbedingungen bei einer "normally open" Kupplung günstiger als bei einer "normally closed" Kupplung.

Die im Betrieb der Verbrennungskraftmaschine anfallenden Wechselmomente können über eine Dämpfungseinrichtung, wie ein Zweimassenschwungrad, welches zwischen Verbrennungsmotor und Hybridmodul angeordnet ist, abgefangen werden.

Weitere bevorzugte Ausgestaltungen der vorliegenden Erfindung sind Gegenstand der abhängigen Ansprüche.

Die vorliegende Erfindung wird nachfolgend anhand bevorzugter Ausführungsbeispiele in Verbindung mit den zugehörigen Figuren näher erläutert. In diesen zeigen:
- Fig. 1: eine schematische Darstellung eines Triebstranges eines Fahrzeuges mit dem vorliegenden Hybridmodul,
- Fig. 2: ein Ausführungsbeispiel des vorliegenden Hybridmoduls, bei welchem der Freilauf axial neben der Zentrallagerung angeordnet ist und bei welchem ein Innenring des Freilaufes gleichzeitig die Anbindung zur Kupplungsscheibe sowie zum Zweimassenschwungrad übernimmt, und bei welchem ein äußerer Käfig des Freilaufes mit dem Getriebeeingang verbunden ist,
- Fig. 3: ein weiteres Ausführungsbeispiel des vorliegenden Hybridmoduls, bei welchem die Anbindung von Innen- und Außenring am Freilauf vertauscht ist im Vergleich zum Ausführungsbeispiel nach Figur 2,
- Fig. 4: ein Ausführungsbeispiel des Hybridmoduls, bei welchem das Zentrallager und der Freilauf zu einer axialen Baueinheit zusammengefasst sind,
- Fig. 5: ein weiteres Ausführungsbeispiel des Hybridmoduls mit einer ersten Art der radialen Schachtelung von Zentrallager und Freilauf, bei welchem das Zentrallager und der Freilauf zu einer radialen Baueinheit zusammengefasst sind,
- Fig. 6: ein weiteres Ausführungsbeispiel des Hybridmoduls mit einer weiteren Art der radialen Schachtelung von Freilauf und Zentrallager,
- Fig. 7: ein weiteres Ausführungsbeispiel des Hybridmoduls mit einer weiteren Art der radialen Schachtelung und Zusammenfassung von Freilauf und Zentrallager,
- Fig. 8: ein weiteres Ausführungsbeispiel des Hybridmoduls, gezeigt zwischen Kurbelwelle und Anschlussteil zu einer weiteren getriebeseitig angeordneten Kupplungseinrichtung, welches auf dem in Figur 6 schematischen gezeigten Ausführungsbeispiel beruht und
- Fig. 9: mehrere Ausführungsbeispiele einer Lagerungs- und Freilaufbaugruppe für das Hybridmodul.

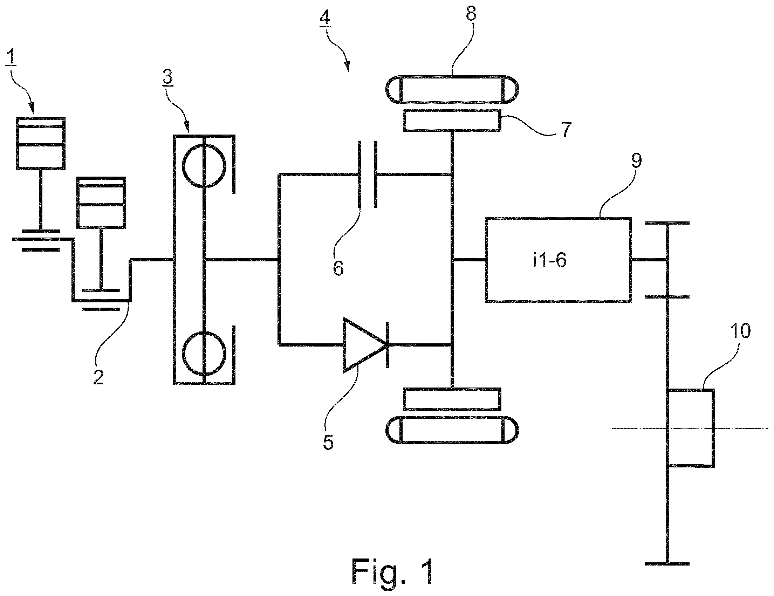

Figur 1 zeigt schematisch einen Triebstrang eines Fahrzeuges mit einem Verbrennungsmotor 1, einem an einer Kurbelwelle 2 des Verbrennungsmotors 1 angebundenem Schwingungsdämpfer (vorliegend einem Zweimassenschwungrad), einem Hybridmodul 4 mit Freilauf 5 und Trennkupplung 6, sowie mit Rotor 7 und Stator 8 eines elektrischen Antriebes, einem Getriebe 9, einem Differenzial 10 und nicht im Einzelnen gezeigten angetriebenen Rädern.

Figur 1 ist dabei nur exemplarisch zu verstehen. So umfasst der Verbrennungsmotor 1 gemäß Darstellung Figur 1 "nur" zwei Zylinder. Die vorliegende Erfindung ist aber nicht auf eine solche konkrete Anzahl an Zylindern beschränkt. Vielmehr wären auch mehr als zwei Zylinder für den Verbrennungsmotor 1 oder auch eine Parallel- und Reihenschaltung mehrerer Verbrennungsmotoren denkbar. Zudem zeigt Figur 1 ein Zweimassenschwungrad. Alternativ hierzu könnte auch ein Einmassenschwungrad oder eine andere Art der Schwingungsdämpfung, wie ein Massen- oder Fliehkraftpendel oder eine Kombination aus solchen Dämpfungselementen verwendet werden, Abhängig von der Laufruhe des oder der Verbrennungsmotoren könnte ggf. auch auf eine solche Dämpfungseinheit verzichtet werden. In Fig. 1 ist zudem als Getriebe ein (automatisiertes) Sechs-Stufen-Schaltgetriebe gezeigt, ohne dass die vorliegende Erfindung hierauf beschränkt wäre. Vielmehr ist die Ausbildung des Getriebes als Automatgetriebe/ Stufengetriebe/ CVT-Getriebe oder andere Arten von Getriebe wie Schubkurbelgetriebe ggf. auch in Verbindung mit einer weiteren Trenneinheit zwischen Getriebe und elektrischem Antrieb 7, 8 (wie einem Drehmomentenwandler, einer weiteren Trennkupplung oder ähnlichen Baugruppen) denkbar.

Fig. 1 ist zum vorliegenden Hybridmodul insbesondere entnehmbar, dass zwischen Verbrennungsmotor 1 und Getriebe 9 zwei parallele Drehmomentübertragungsstränge vorgesehen sind, einem ersten mit der Trennkupplung 6 und einem zweiten mit dem Freilauf 5, so dass die Funktionen der aus dem Stand der Technik bekannten motorseitigen Trennkupplung auf zwei voneinander verschiedene Bauteile aufgeteilt sind. So wird das von der Brennkraftmaschine 1 erzeugte Moment abhängig von einer an der Kupplung anliegenden Betätigungskraft auf Trennkupplung und Freilauf aufgeteilt.

Der Freilauf überträgt wie Figur 1 entnehmbar bei Drehmomentübertragung vom Verbrennungsmotor 1 auf das Getriebe 9 und öffnet bei Drehmomentenflussrichtung von Getriebe 9 auf Verbrennungsmotor 1. Drehmomente vom Getriebe 9 in Richtung Verbrennungsmotor 1 sind bei geschlossener Kupplung übertragbar. Dies betrifft insbesondere das Anschleppen des Verbrenners aus dem elektrischen Fahren sowie das Übertragen des Schubmomentes im Falle einer vollen Batterie.

Im verbrennungsmotorischen Betrieb des Triebstanges bleibt die Trennkupplung aber im Regelfall geschlossen, so dass diese entsprechend ihrer anliegenden Drehmomentenübertragungskapazität das vom Verbrennungsmotor übertragbare Moment jedenfalls anteilig zusammen mit dem Freilauf überträgt.

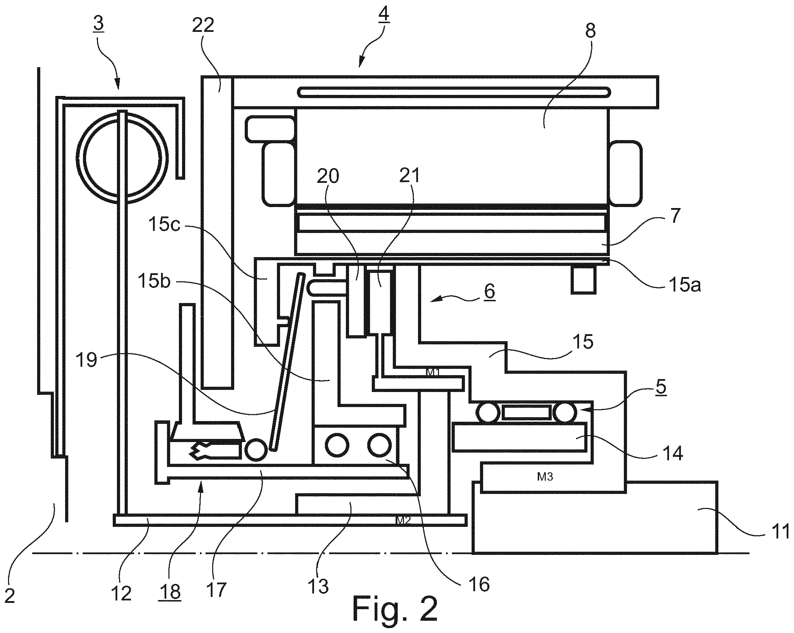

Eine erste konstruktive Ausgestaltung des in Figur 1 gezeigten Schemas ist Figur 2 entnehmbar, welches das Hybridmodul 4 zwischen dem Zweimassenschwungrad ("ZMS") 3 und einer Getriebeeingangswelle 11 des Getriebes 9 als Halbschnitt zeigt, wobei eine Ausgangsseite 12 des ZMS 3 mit einem Zentralbauteil 13, vorliegend über eine axiale Steckverzahnung M2, verbunden ist. Das gesamte vom Verbrennungsmotor 1 erzeugte Drehmoment wird dementsprechend unter Vermittlung des ZMS 3 und Zwischenwelle 12 an das Zentralbauteil 13 des Hybridmoduls übertragen. Das Zentralbauteil 13 ist mit einem Innenring 14 des Freilaufes 5 verbunden bzw. ein Teil des Zentralbauteils 13 (beispielsweise ein hülsenartiger Fortsatz) ist unmittelbar als Innenring 14 des Freilaufes ausgestaltet. Ein Außenring des Freilaufes 5 ist mit einem Kupplungsgehäuse 15 der Trennkupplung 4 verbunden bzw. ein Teil des Kupplungsgehäuse 15 ist unmittelbar als Außenring bzw. als äußerer Käfig des Laufringes ausbildet. Das Kupplungsgehäuse 15 ist, vorzugsweise über eine weitere axiale Steckverzahnung M3, mit einer Getriebeeingangswelle 11 des Getriebes 9 verbunden, wobei zwischen Kupplungsgehäuse und Getriebeeingangswelle eine weitere Trennkupplung (beispielsweise ein Wandler oder eine weitere Reibkupplung) angeordnet sein kann.

Das Kupplungsgehäuse 15 umfasst weiterhin einen zylindrischen Teil 15a, welcher zugleich Teil des Rotors 7 des elektrischen Antriebs 7, 8 ist. So sind vorliegend die Permanentmagnete des Rotors unmittelbar am zylindrischen Teil 15a des Kupplungsgehäuses befestigt.

Das Kupplungsgehäuse 15 umfasst weiterhin einen radial erstreckten Bereich 15b, welcher an einem radial äußeren Bereich mit dem zylindrischen Teil 15a verbunden ist, und welcher in einem radial inneren Bereich einen hülsenartigen Abschnitt aufweist, der auf einem Zentrallager 16 abgestützt ist.

Das Zentrallager 16 wiederum ist an einem Gehäuse 17 der Betätigungseinrichtung 18 der Trennkupplung 6 bzw. an einem hülsenartigen Bauteil 17, auf dem die Betätigungseinrichtung abstützbar ist, angeordnet.

Die Betätigungseinrichtung 18 umfasst vorliegend eine hydraulische Betätigungseinheit mit einem zur Zwischenwelle 12 konzentrisch angeordneten hydraulischen Zylinder, welcher eine Hebelfeder 19 betätigt, die an einem weiteren radial erstreckten Bereich 15c des Kupplungsgehäuses 15 der Trennkupplung 6 abgestützt ist und welche eine Anpressplatte 20 in axialer Richtung mit einer Betätigungskraft beaufschlagen kann entsprechend der Stellung des Betätigungszylinders.

Entsprechend einer axialen Verlagerung der Anpressplatte 20 wird eine Kupplungsscheibe 21 zwischen Anpressplatte 20 und Kupplungsgehäuse der Trennkupplung 6 geklemmt, wodurch die Trennkupplung 6 geschlossen werden kann.

Die Kupplungsscheibe 21 der Trennkupplung 6 ist über die axiale Steckverzahnung M1 mit dem Zentralbauteil 13 drehfest verbunden.

Die Betätigungseinheit 18 ist am Getriebegehäuse 22 befestigt.

Wie in Figur 2 gezeigt, kann das Zentrallager 16 (das vorliegend als Festlager ausgebildet ist) im Wesentlichen axial neben (also auf einem vergleichbaren Durchmesser) zum Freilauf 5 angeordnet werden, wobei ein Innenring des Freilaufes die Anbindung zur Kupplungsscheibe sowie zum Zweimassenschwungrad (über das Zentralbauteil 13) übernimmt und wobei ein äußerer Käfig des Freilaufes 5 über das Kupplungsgehäuse 15 mit dem Getriebeeingang verbunden ist.

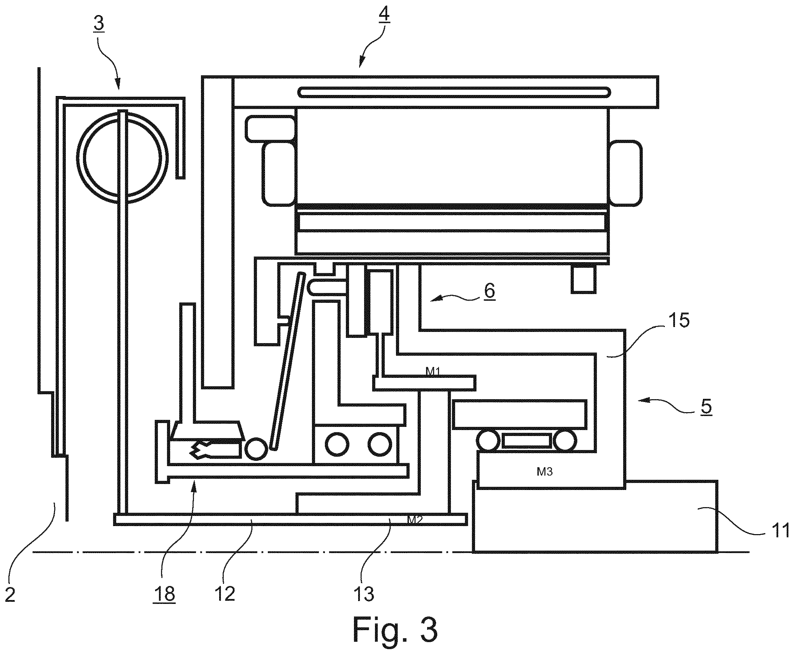

In Figur 3 ist ein weiteres Ausführungsbeispiel des Hybridmoduls gezeigt, das sich vom Ausführungsbeispiel nach Figur 2 nur im Hinblick auf die Anordnung des Freilaufes und die hierfür notwendige Ausbildung von Kupplungsgehäuse 15 und Zentralbauteil 13 unterscheidet. Die übrigen Merkmale sind identisch zum vorstehend beschriebenen Ausführungsbeispiel nach Fig. 2. So ist bei dem Ausführungsbeispiel nach Figur 3 die Anbindung von Innen- und Außenring am Freilauf vertauscht, wobei zudem der Außenring des Freilaufes 5 Bestandteil des Zentralbauteils 13 und der Innenring des Freilaufs 5 Bestandteil des Kupplungsgehäuses 15 sind.

Eine Auswahl der Anordnung nach Figur 2 oder nach Figur 3 kann abhängig von einer Schleppmomentenoptimierung sowie abhängig von einer Blockierfunktion bei hohen Drehzahlen gewählt werden.

Den Ausführungsbeispielen nach Figur 2 und 3 ist gemeinsam, dass Freilauf 5 und Zentrallager 16 im Wesentlichen auf einem vergleichbaren Durchmesser angeordnet sind. Werden zudem die axialen Positionen von Freilauf 5 und Zentrallager 16 einander angenähert, so können diese beiden Bauelementen auch zu einer Baueinheit zusammengefasst werden.

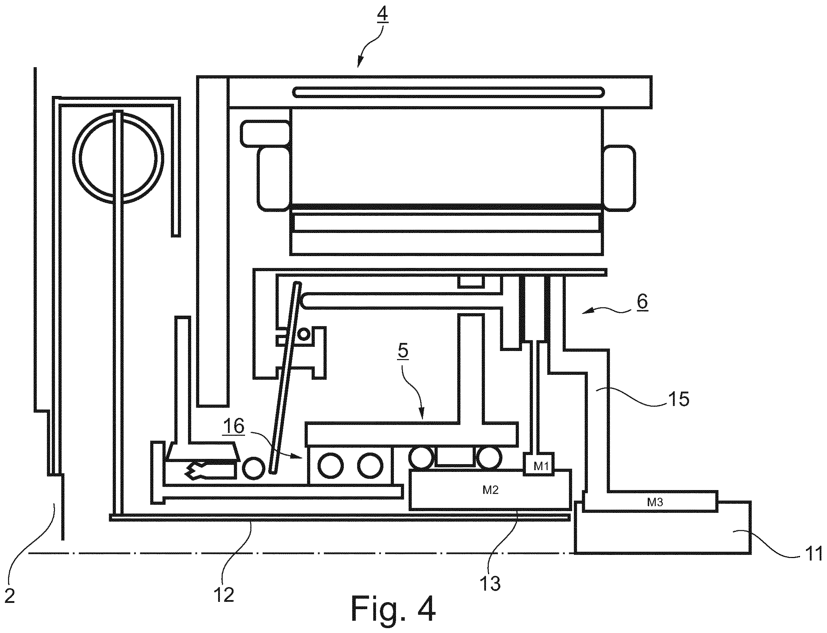

In Figur 4 ist eine derartige Ausbildung mit einer aus Zentrallager und Freilauf bestehenden Baueinheit schematisch dargestellt, wobei die abzudichtenden Stellen über die in Figur 4 aufgenommenen Pfeile dargestellt ist. Im Vergleich zu den Ausführungsbeispielen nach Figuren 2 und 3 kann also eine Dichtung entfallen. Es sind nur noch 3 Dichtungen notwendig. Zudem kann die Ausgestaltung des Zentralbauteils 14 beim Ausführungsbeispiel nach Figur 4 im Vergleich zu den Ausführungsbeispielen nach Figur 2 und 3 vereinfacht werden.

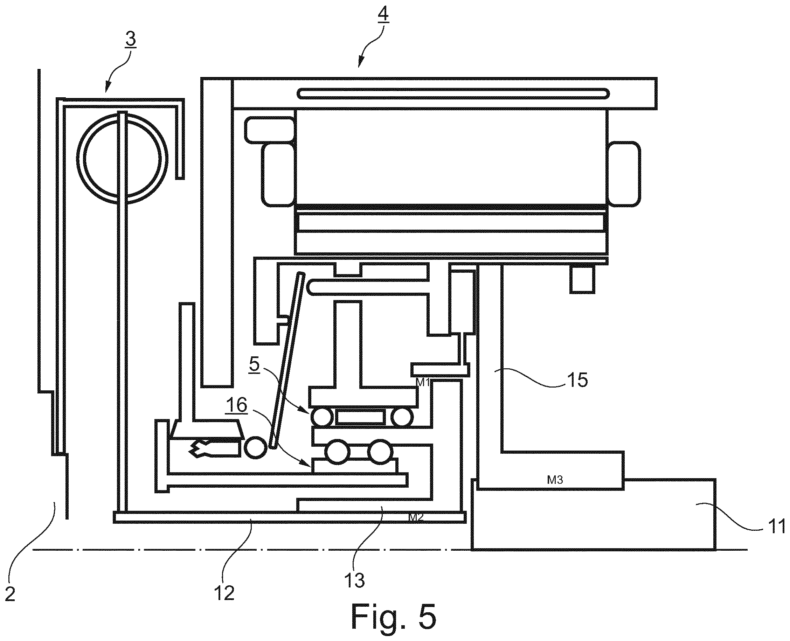

In Figur 5 ist ein weiteres Ausführungsbeispiel des Hybridmoduls 4 dargestellt, bei dem das Zentrallager 16 und der Freilauf 5 radial geschachtelt angeordnet sind. Hierüber hinaus ist das Zentralbauteil 13 derart ausgebildet, dass es zugleich ein Außenring des Zentrallagers 16 und ein Innenring des Freilaufes 5 bildet, wiederum um eine Baueinheit aus Zentrallager und Freilauf zu bilden. Wiederum kann eine der in Figur 2 und 3 noch notwendigen Dichtungen entfallen.

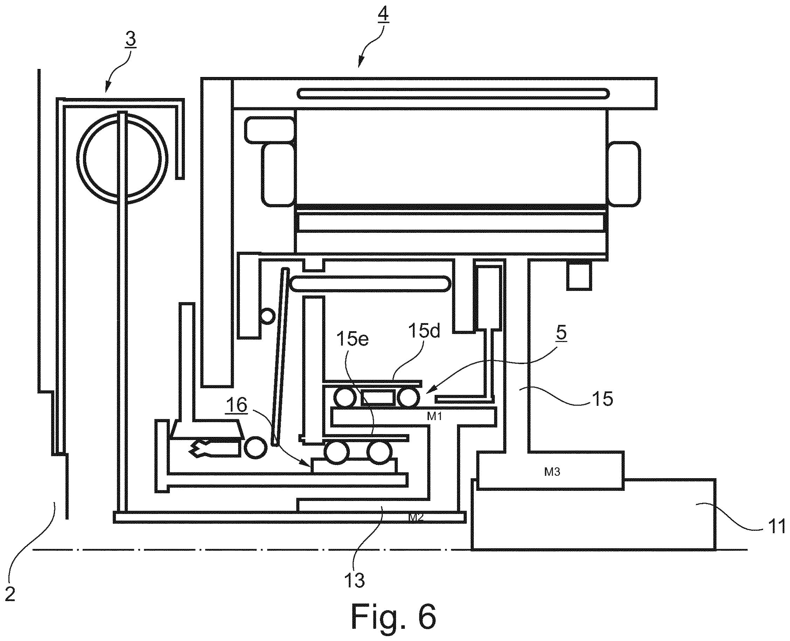

In Figur 6 ist eine weitere Möglichkeit der radialen Schachtelung von Freilauf 5 und Zentrallager gezeigt, wobei vorliegend ein Innenring des Freilaufes 5 integral mit dem Zentralbauteil 13 ausgebildet ist, und wobei das Kupplungsgehäuse 15 einen hülsenartigen Abschnitt 15d umfasst, an dem ein Außenring des Freilaufes 5 angeordnet bzw. ausgebildet ist. Ein Lageraußenring des Zentrallagers 16 kann demgegenüber an einem weiteren hülsenartigen Abschnitt 15e des Kupplungsgehäuses 15 angeordnet bzw. ausgebildet sein.

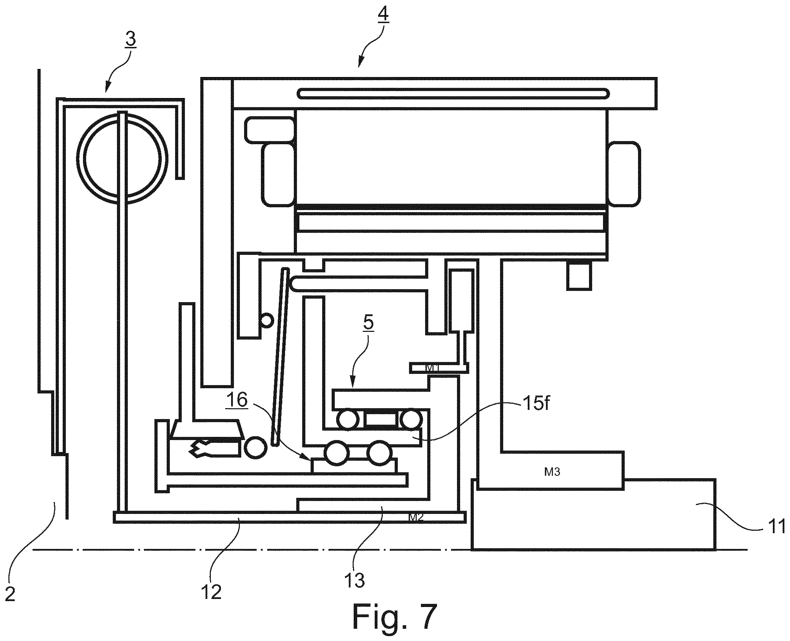

In Figur 7 ist ein weiteres Ausführungsbeispiel des Hybridmoduls gezeigt, wobei Freilauf 5 und Zentrallager 16 wiederum geschachtelt angeordnet sind, und wobei das Kupplungsgehäuse 15 einen hülsenartigen Abschnitt 15f aufweist, an welchem ein Lageraußenring des Lagers 16 und ein Innenring des Freilaufes 5 angeordnet bzw. ausgebildet sind. In Figur 7 sind wiederum die abzudichtenden Stellen über die Pfeile angedeutet.

Gerade den Ausführungsbeispielen gemäß den Figuren 5 bis 7 ist also entnehmbar, Zentrallager und Freilauf radial zu schachteln, wobei eine weitere Zusammenfassung dieser Baugruppen dadurch erfolgen kann, dass Lageraußenring und Freilaufinnenring oder umgekehrt zu einem Bauteil zusammenfasst werden, wobei entsprechend nur 3 Dichtungen notwendig sind, gegenüber 4 Dichtungen bei separater Ausbildung.

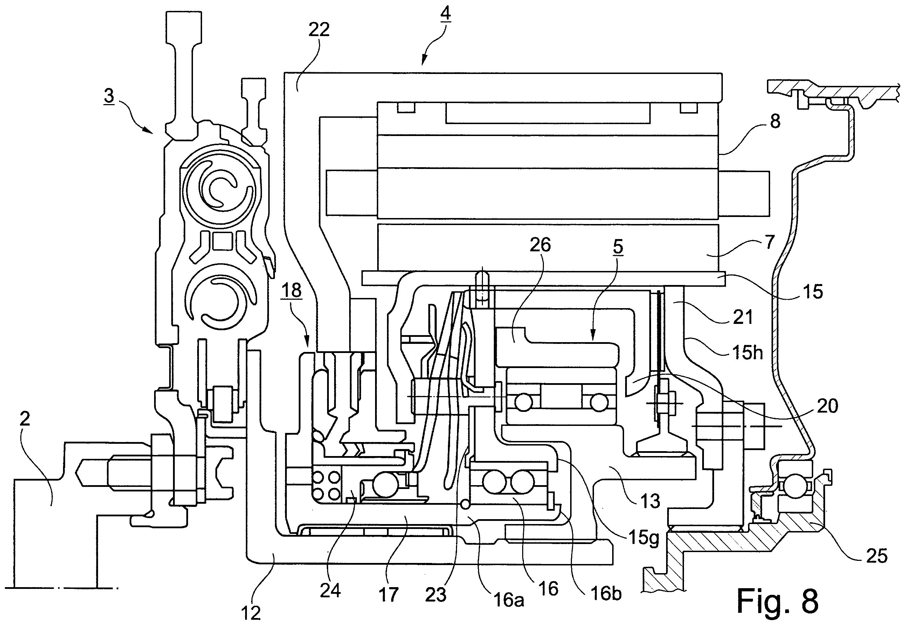

In Figur 8 ist ein weiteres Ausführungsbeispiel des Hybridmoduls 4 gezeigt, wobei das von der Kurbelwelle 2 kommende Drehmoment über das ZMS 3 (vorliegend mit einem innenliegenden Fliehkraftpendel ausgebildet) an die Zwischenwelle 12(welche am Sekundärflansch des ZMS befestigt ist bzw. mit diesem integral ausgebildet ist) übermittelt wird. Die Zwischenwelle 12 ist über eine Radiallagerung an einem Gehäusebauteil 17 bzw. an einem Flanschbauteil 17 drehbar abgestützt. Am Flanschbauteil 17 ist auch das Zentrallager 16 angeordnet, welches als Festlager zwischen Flanschbauteil 17 und Kupplungsgehäuse 15 ausgebildet ist. Entsprechend ist ein Lagerinnenring des Zentrallagers 16 über ein Ringelement 16a und einen Sicherungsring 16b festgelegt und ein Lageraußenring des Zentrallagers 16 über einen Flanschabschnitt 15g des Kupplungsgehäuses 15 in Verbindung mit einer Deckplatte 23 festgelegt. Das Flanschbauteil 17 ist am Getriebegehäuse 22 angebunden und kann Bestandteil des Gehäuses der Betätigungseinrichtung 18 sein. Die Betätigungseinrichtung 18 ist vorliegend als hydraulische Betätigungseinheit mit einem zentralen koaxial zur Zwischenwelle 12 angeordneten Zylinder und einem vorliegend halb-angebundenen Betätigungskolben ausgebildet. Halb angebunden bedeutet in diesem Fall, dass ein axiales Spiel zwischen Betätigungskolben und Betätigungslager 24 vorgesehen ist, um Stöße bei der Betätigung der Kupplung zu vermeiden.

Die Darstellung nach Figur 8 enthält zudem die beiden Extrempositionen der einen Hebelfeder 19, also einer hinteren Lage des Betätigungslagers 24 und einer vorderen Lage des Betätigungslagers 24.

Das Kupplungsgehäuse trägt wiederum den Rotor 7 der elektrischen Antriebseinheit bzw. ist mit diesem jedenfalls drehverbunden. Das Kupplungsgehäuse 15 ist zudem über einen radialen Abschnitt 15h mit einer weiteren Zwischenwelle 25 verbunden, wobei am Abschnitt 15h auch eine Anlagefläche für die Kupplungsscheibe 21 vorgesehen ist, welche zwischen diesem Abschnitt 15h und der Anpressplatte 20 einklemmbar ist.

Die Nabe der Kupplungsscheibe 21 ist dabei über eine axiale Steckverzahnung mit dem Zentralbauteil 13 verbunden.

Das Zentralbauteil 13 ist zudem mit einem Innenring des Freilaufes 5 verbunden, wobei ein Außenring des Freilaufes 5 über ein Zwischenbauteil 26 am Kupplungsgehäuse 15 angebunden ist.

Zwischen Kupplungsgehäuse 15 und Zwischenwelle 25 ist wiederum eine axiale Steckverzahnung vorgesehen. Die Zwischenwelle 25 kann über eine weitere Kupplungseinheit bzw. direkt mit dem Getriebe verbunden sein.

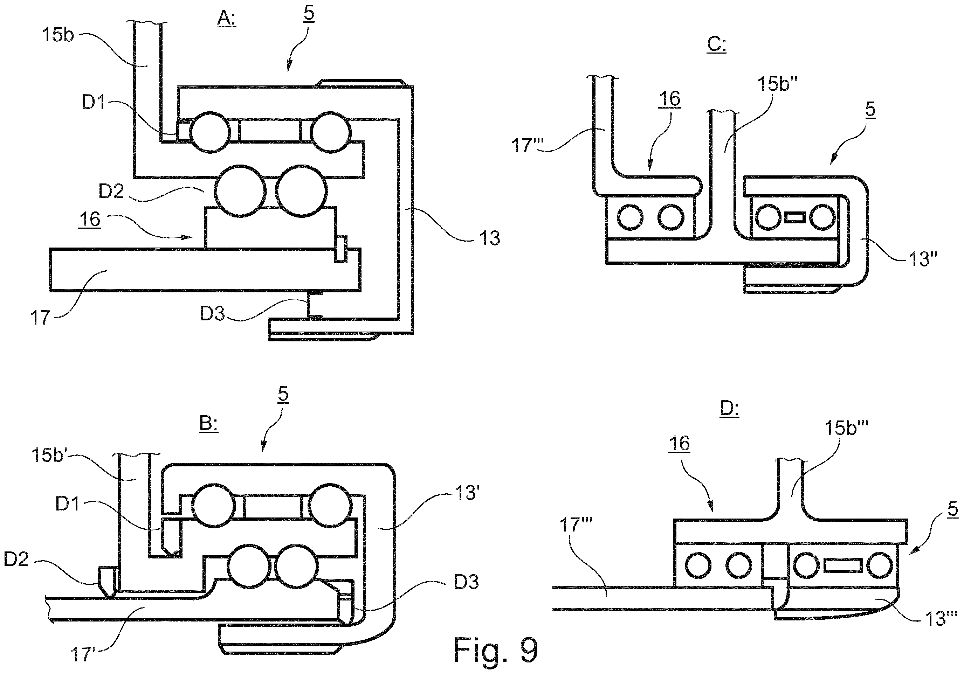

In Figur 9 sind verschiedene Varianten einer Kombination von Freilauf und Zentrallager gezeigt, wobei als Beispiel A eine radiale Schachtelung gemäß Figur 5 abgebildet ist und wobei die zur Abdichtung verwendeten Dichtungen D1, D2 und D3 abgebildet sind.

Im Bereich B der Figur 9 ist eine weitere Möglichkeit der radialen Schachtelung gezeigt, wobei ein Lagerinnenring des Zentrallager integral mit einem Flanschbauteil 17' ausbildet ist, und wobei das Zentralbauteil 13' mit einem Absatz ausbildet ist, um eine Spaltdichtung zum Kupplungsgehäuseabschnitt 15B' zu erzeugen. Wiederum sind die Dichtungen D1, D2 und D3 nunmehr in leicht veränderten Anordnungen gezeigt.

In den Bereichen C und D der Figur 9 sind zwei Möglichkeiten einer axialen Baugruppenbildung von Zentrallager 16 und Freilauf 5 abgebildet.

### Bezugszeichenliste

- 1: Verbrennungsmotor
- 2: Kurbelwelle
- 3: ZMS
- 4: Hybridmodul
- 5: Freilauf
- 6: Trennkupplung
- 7: Rotor
- 8: Stator
- 9: Getriebe
- 10: Differenzial
- 11: Getriebeeingangsseite
- 12: Ausgangsseite
- 13: Zentralbauteil
- 13': Zentralbauteil
- 14: Innenring
- 15: Kupplungsgehäuse
- 15A: zylindrisches Teil
- 15B: radial erstreckter Bereich
- 15B': Kupplungsgehäuseabschnitt
- 15C: radial erstreckter Bereich
- 15D: hülsenartiger Abschnitt
- 15E: hülsenartiger Abschnitt

- 15G: Flanschabschnitt
- 15H: radialer Abschnitt
- 16: Zentrallager
- 16A: Ringelement
- 16B: Sicherungsring
- 17: Gehäuse
- 18: Betätigungseinrichtung
- 19: Hebelfeder
- 20: Anpressplatte
- 22: Getriebegehäuse
- 23: Deckplatte
- 24: Betätigungslager
- 25: Zwischenwelle
- 26: Zwischenbauteil

- D1: Dichtung
- D2: Dichtung
- D3: Dichtung

- M1: Steckverzahnung
- M2: Steckverzahnung
- M3: Steckverzahnung

## Patentansprüche

1. Hybridmodul (4) für einen Triebstrang eines Fahrzeuges mit Verbrennungsmotor (1) und Getriebe (9), wobei das Hybridmodul (4) zwischen Verbrennungsmotor (1) und Getriebe (9) wirksam ist und aufweist:
einen elektrischen Antrieb (7, 8), eine Trennkupplung (6) und einen Freilauf (5), wobei die Trennkupplung (6) und der Freilauf (5) parallel zueinander jeweils zur Drehmomentübertragung von Verbrennungsmotor (1) in Richtung Getriebe (9) vorgesehen sind, der Freilauf (5) vom Verbrennungsmotor (1) kommendes Drehmoment in Richtung Getriebe (9) überträgt und bei entgegengesetzt gerichtetem Drehmoment öffnet, und ein vom Freilauf (5) übertragener Anteil am vom Verbrennungsmotor (1) erzeugten Drehmoment durch Einstellung eines von der Trennkupplung (6) übertragbaren Drehmomentes einstellbar ist, so dass das Fahrzeug wahlweise durch den Verbrennungsmotor (1) oder den elektrischen Antrieb (7, 8) oder kombiniert gleichzeitig durch beide antreibbar ist
**dadurch gekennzeichnet, dass**
das Hybridmodul (4) dazu eingerichtet ist, dass die Trennkupplung (6) teilweise geschlossen wird, wobei entsprechend dem von der Trennkupplung (6) übertragbaren Drehmoment ein durch den Freilauf (5) übertragenes Drehmoment verringert wird.

2. Hybridmodul (4) nach Anspruch 1, wobei das Kupplungsgehäuse (15) mit einer Getriebeeingangswelle (11) über eine erste drehfeste Verbindung (M3), insbesondere eine erste axiale Steckverzahnung, verbunden ist und an welches ein Rotor (7) des elektrischen Antriebes (7, 8) Drehmoment überträgt, wobei der Freilauf (5) im Drehmomentfluß zwischen einer Kurbelwelle (2) und dem Kupplungsgehäuse (15) angeordnet ist.

3. Hybridmodul (4) nach Anspruch 2, mit einem Zentralbauteil (13), welches mit der Kurbelwelle (2) und mit einer Kupplungsscheibe (21) der Trennkupplung (6) drehfest verbunden ist, und wobei der Freilauf (5) zwischen Zentralbauteil (13) und Kupplungsgehäuse (15) angeordnet ist.

4. Hybridmodul nach Anspruch 3, wobei das Zentralbauteil (13) über eine zweite drehfeste Verbindung (M2), insbesondere eine zweite axiale Steckverzahnung, mit der Kurbelwelle (2) oder einem mit dieser verbundenen Bauteil verbunden ist, und über eine dritte drehfeste Verbindung (M1), insbesondere eine dritte axiale Steckverzahnung, mit einer Nabe der Kupplungsscheibe (21) der Trennkupplung (6) verbunden ist.

5. Hybridmodul (4) nach einem der Ansprüche 1 bis 4, wobei ein Kupplungsgehäuse (15) der Trennkupplung (6) über ein Zentrallager (16) axial und radial an einem Getriebegehäuse (22) gelagert ist.

6. Hybridmodul (4) nach einem der Ansprüche 1 bis 5, mit einer hydraulischen oder pneumatischen oder elektromechanischen oder elektrischen Betätigungseinheit (18) zur Betätigung der Trennkupplung (6), wobei das Zentrallager (16) auf einem Gehäuse (17) der Betätigungseinheit (18) angeordnet ist.

7. Hybridmodul (4) nach einem der Ansprüche 1 bis 6, wobei die Trennkupplung (6) radial innerhalb des Rotors (7) des elektrischen Antriebes (7, 8) und axial zumindest teilweise überlappend mit dem Rotor (7) des elektrischen Antriebes (7, 8) angeordnet ist.

8. Hybridmodul (4) nach Anspruch 7, wobei der Rotor (7) mit dem Kupplungsgehäuse (15) der Trennkupplung (6) drehfest verbunden ist oder integral mit dem Kupplungsgehäuse (15) der Trennkupplung (6) ausgebildet ist.

9. Hybridmodul (4) nach einem der Ansprüche 1 bis 8, mit einem Schwungmassendämpfer (3), insbesondere einem Zweimassenschwungrad, das in einem Triebstrang zwischen Verbrennungsmotor (1) und Hybridmodul (4) angeordnet ist.

10. Hybridmodul (4) nach Anspruch 9, wobei eine Ausgangsseite des Schwungmassendämpfers (3) mit einer Zwischenwelle (12) drehfest verbunden, insbesondere verschraubt oder vernietet, ist, und wobei die Zwischenwelle (12) sich durch die Betätigungseinheit (18) hindurch erstreckt und über eine Radiallagerung in dem Gehäuse (17) der Betätigungseinheit (18) gelagert ist.

11. Hybridmodul (4) nach Anspruch 10, wobei die Zwischenwelle (12) mit dem Zentralbauteil (13) über die zweite drehfeste Verbindung (M2) verbunden ist.

12. Hybridmodul (4) nach einem der Ansprüche 1 bis 11, wobei die Trennkupplung (6) vorgesehen ist, Drehmoment in Richtung Verbrennungsmotor (1) zu übertragen, wenn Drehmoment von dem Triebstrang in Richtung Verbrennungsmotor (1) zu übertragen ist.

13. Hybridmodul (4) nach einem der Ansprüche 1 bis 12, wobei das Zentrallager (16) und der Freilauf (5) axial und/oder radial zu einer Baueinheit zusammengefasst sind.

14. Hybridmodul (4) nach einem der Ansprüche 1 bis 13, wobei das Zentrallager (16) und der Freilauf (5) radial geschachtelt oder axial benachbart angeordnet sind.

15. Hybridmodul (4) nach Anspruch 13 oder 14, wobei Zentrallager (16) und Freilauf (5) in der Art radial zu einer Baueinheit zusammengefasst sind, dass eine Lauffläche des Zentrallagers (16) und eine Lauffläche des Freilaufs (5) zu einem Bauteil zusammengefasst sind.

16. Hybridmodul (4) nach einem der Ansprüche 1 bis 15, wobei ein Innenring (14) des Freilaufs (5) gleichzeitig die Anbindung zur Kupplungsscheibe (21) sowie zur Kurbelwelle (2) übernimmt und ein Außenring des Freilaufs (5) mit einem Getriebeeingang verbunden ist, oder wobei ein Innenring (14) des Freilaufs (5) mit dem Getriebeeingang verbunden ist und ein Außenring des Freilaufs (5) gleichzeitig die Anbindung zur Kupplungsscheibe (21) sowie zur Kurbelwelle (2) übernimmt.

17. Hybridmodul (4) nach einem der Ansprüche 1 bis 16, wobei die Trennkupplung (6) im Grundzustand geschlossen ausgebildet ist.

18. Verfahren zum Übertragen eines Drehmomentes in einem Triebstrang eines Kraftfahrzeuges, das die Schritte aufweist:
Antreiben des Kraftfahrzeugs wahlweise durch einen Verbrennungsmotor (9) oder einen elektrischen Antrieb (7,8) oder kombiniert gleichzeitig durch beide durch Übertragen des von dem Verbrennungsmotor (1) kommenden Drehmoments in Richtung eines Getriebes (9) über einen Freilauf (5) und/oder über eine Trennkupplung (6); und
Einstellen eines vom Freilauf (5) übertragenen Anteils an einem vom Verbrennungsmotor (1) erzeugten Drehmoment durch Einstellen eines von der Trennkupplung (6) übertragbaren Drehmoments,
**gekennzeichnet durch**
ein teilweises Schließen der Trennkupplung (6), wobei entsprechend dem von der Trennkupplung (6) übertragbaren Drehmoment ein durch den Freilauf (5) übertragenes Drehmoment verringert wird.

## Claims

1. A hybrid module (4) for a drive train of a vehicle having an internal combustion engine (1) and a transmission (9), wherein the hybrid module (4) is effective between the internal combustion engine (1) and the transmission (9) and comprises:
an electric drive (7, 8), a separating clutch (6) and a freewheel (5), wherein the separating clutch (6) and the freewheel (5) are provided parallel to each other in each case for torque transmission from the internal combustion engine (1) in the direction of the transmission (9), the freewheel (5) transmits torque coming from the internal combustion engine (1) in the direction of the transmission (9) and opens for torque directed in the opposite direction, and a portion of the torque generated by the internal combustion engine (1) and transmitted by the freewheel (5) can be adjusted by adjusting a torque that can be transmitted by the separating clutch (6) so that the vehicle can be driven optionally by the internal combustion engine (1) or the electric drive (7, 8) or simultaneously by both in a combined manner,
**characterised in that**
the hybrid module (4) is configured such that the separating clutch (6) is partially closed, wherein a torque transmitted by the freewheel (5) is reduced according to the torque that can be transmitted by the separating clutch (6).

2. The hybrid module (4) according to claim 1, wherein the clutch housing (15) is connected to a transmission input shaft (11) via a first rotationally fixed connection (M3), in particular a first axial spline, and to which a rotor (7) of the electric drive (7, 8) transmits torque, wherein the freewheel (5) is arranged in the torque flow between a crankshaft (2) and the clutch housing (15).

3. The hybrid module (4) according to claim 2, comprising a central component (13) which is connected for conjoint rotation with the crankshaft (2) and with a clutch disc (21) of the separating clutch (6), and wherein the freewheel (5) is arranged between the central component (13) and clutch housing (15).

4. The hybrid module according to claim 3, wherein the central component (13) is connected to the crankshaft (2), or to a component connected thereto, via a second rotationally fixed connection (M2), in particular a second axial spline, and is connected via a third rotationally fixed connection (M1), in particular a third axial spline, to a hub of the clutch disc (21) of the separating clutch (6).

5. The hybrid module (4) according to one of claims 1 to 4, wherein a clutch housing (15) of the separating clutch (6) is mounted axially and radially on a transmission housing (22) via a central bearing (16).

6. The hybrid module (4) according to one of claims 1 to 5, comprising a hydraulic or pneumatic or electromechanical or electrical actuating unit (18) for actuating the separating clutch (6), wherein the central bearing (16) is arranged on a housing (17) of the actuating unit (18).

7. The hybrid module (4) according to one of claims 1 to 6, wherein the separating clutch (6) is arranged radially inside the rotor (7) of the electric drive (7, 8) and at least partially axially overlapping with the rotor (7) of the electric drive (7, 8).

8. The hybrid module (4) according to claim 7, wherein the rotor (7) is connected for conjoint rotation with the clutch housing (15) of the separating clutch (6) or is integrally formed with the clutch housing (15) of the separating clutch (6).

9. The hybrid module (4) according to one of claims 1 to 8, comprising a flywheel damper (3), in particular a dual-mass flywheel, which is arranged in a drive train between the internal combustion engine (1) and hybrid module (4).

10. The hybrid module (4) according to claim 9, wherein an output side of the flywheel damper (3) is connected, in particular screwed or riveted, for conjoint rotation with an intermediate shaft (12), and wherein the intermediate shaft (12) extends through the actuating unit (18) and is mounted via a radial bearing in the housing (17) of the actuating unit (18).

11. The hybrid module (4) according to claim 10, wherein the intermediate shaft (12) is connected to the central component (13) via the second rotationally fixed connection (M2).

12. The hybrid module (4) according to one of claims 1 to 11, wherein the separating clutch (6) is provided to transmit torque in the direction of the internal combustion engine (1) if torque is to be transmitted from the drive train in the direction of the internal combustion engine (1).

13. The hybrid module (4) according to one of claims 1 to 12, wherein the central bearing (16) and the freewheel (5) are combined axially and/or radially to form a structural unit.

14. The hybrid module (4) according to one of claims 1 to 13, wherein the central bearing (16) and the freewheel (5) are arranged in a radially nested or axially adjacent manner.

15. The hybrid module (4) according to claim 13 or 14, wherein the central bearing (16) and freewheel (5) are combined radially to form a structural unit in such a way that a running surface of the central bearing (16) and a running surface of the freewheel (5) are combined to form a component.

16. The hybrid module (4) according to one of claims 1 to 15, wherein an inner ring (14) of the freewheel (5) simultaneously takes over the connection to the clutch disc (21) and to the crankshaft (2) and an outer ring of the freewheel (5) is connected to a transmission input, or wherein an inner ring (14) of the freewheel (5) is connected to the transmission input and an outer ring of the freewheel (5) simultaneously takes over the connection to the clutch disc (21) and to the crankshaft (2).

17. The hybrid module (4) according to one of claims 1 to 16, wherein the separating clutch (6) is designed to be closed in the default state.

18. A method for transmitting a torque in a drive train of a motor vehicle, comprising the steps:
driving the motor vehicle optionally by an internal combustion engine (9) or an electric drive (7, 8) or simultaneously in a combined manner by both transmitting the torque coming from the internal combustion engine (1) in the direction of a transmission (9) via a freewheel (5) and/or via a separating clutch (6), and by adjusting a portion of a torque generated by the internal combustion engine (1) which is transmitted by the freewheel (5) by adjusting a torque that can be transmitted by the separating clutch (6),
**characterised by**
a partial closing of the separating clutch (6), wherein a torque transmitted by the freewheel (5) is reduced according to the torque that can be transmitted by the separating clutch (6).

## Revendications

1. Module hybride (4) pour une chaîne cinématique d'un véhicule à moteur à combustion interne (1) et une transmission (9), le module hybride (4) étant actif entre le moteur à combustion interne (1) et la transmission (9) et comprenant :
un entraînement électrique (7, 8), un embrayage de séparation (6) et une roue libre (5),
l'embrayage de séparation (6) et la roue libre (5) étant disposés parallèlement l'un à l'autre respectivement pour la transmission du couple du moteur à combustion interne (1) en direction de la transmission (9),
la roue libre (5) transmettant un couple provenant du moteur à combustion interne (1) en direction de la transmission (9) et s'ouvrant lorsque le couple est orienté en sens inverse et
une fraction du couple généré par le moteur à combustion interne (1) transmise par la roue libre (5) est réglable par le réglage d'un couple transmissible par l'embrayage de séparation (6), de sorte que le véhicule puisse être entraîné soit par le moteur à combustion interne (1), soit par l'entraînement électrique (7, 8), soit de façon combinée simultanément par les deux
**caractérisé en ce que**
le module hybride (4) est configuré pour que l'embrayage de séparation (6) soit partiellement fermé,
le couple transmis par la roue libre (5) étant réduit en fonction du couple transmissible par l'embrayage de séparation (6).

2. Module hybride (4) selon la revendication 1, dans lequel le carter d'embrayage (15) est relié à un arbre d'entrée de transmission (11) via une première liaison calée en rotation (M3), notamment une première denture d'engagement axiale et auquel un rotor (7) de l'entraînement électrique (7, 8) transmet le couple, la roue libre (5) étant disposée dans le flux de couple entre un vilebrequin (2) et le carter d'embrayage (15).

3. Module hybride (4) selon la revendication 2, ayant un composant central (13) qui est relié de manière calée en rotation au vilebrequin (2) et à un disque d'embrayage (21) de l'embrayage de séparation (6) et dans lequel la roue libre (5) est agencée entre le composant central (13) et le carter d'embrayage (15).

4. Module hybride selon la revendication 3, dans lequel le composant central (13) est relié par une deuxième liaison calée en rotation (M2), en particulier une deuxième denture d'engagement axiale, au vilebrequin (2) ou à une pièce reliée à celui-ci, et est relié par une troisième liaison calée en rotation (M1), en particulier une troisième denture d'engagement axiale, à un moyeu du disque d'embrayage (21) de l'embrayage de séparation (6).

5. Module hybride (4) selon l'une des revendications 1 à 4, dans lequel un carter d'embrayage (15) de l'embrayage de séparation (6) est monté axialement et radialement sur un carter de transmission (22) via un palier central (16).

6. Module hybride (4) selon l'une des revendications 1 à 5, comprenant une unité d'actionnement hydraulique ou pneumatique ou électromécanique ou électrique (18) pour actionner l'embrayage de séparation (6), le palier central (16) étant agencé sur un boîtier (17) de l'unité d'actionnement (18).

7. Module hybride (4) selon l'une des revendications 1 à 6, l'embrayage de séparation (6) étant agencé radialement à l'intérieur du rotor (7) de l'entraînement électrique (7, 8) et chevauchant axialement au moins partiellement le rotor (7) de l'entraînement électrique (7, 8).

8. Module hybride (4) selon la revendication 7, dans lequel le rotor (7) est relié de façon calée en rotation au carter d'embrayage (15) de l'embrayage de séparation (6) ou est réalisé intégralement avec le carter d'embrayage (15) de l'embrayage de séparation (6).

9. Module hybride (4) selon l'une des revendications 1 à 8, comprenant un amortisseur à masse d'inertie (3), en particulier un volant d'inertie à deux masses, qui est disposé dans une chaîne cinématique entre le moteur à combustion interne (1) et le module hybride (4).

10. Module hybride (4) selon la revendication 9, dans lequel un côté de sortie de l'amortisseur à masse d'inertie (3) est relié de façon calée en rotation, en particulier vissé ou riveté, à un arbre intermédiaire (12) et dans lequel l'arbre intermédiaire (12) s'étend à travers l'unité d'actionnement (18) et est supporté par un appui radial dans le boîtier (17) de l'unité d'actionnement (18).

11. Module hybride (4) selon la revendication 10, dans lequel l'arbre intermédiaire (12) est relié au composant central (13) via la deuxième liaison calée en rotation (M2).

12. Module hybride (4) selon l'une des revendications 1 à 11, dans lequel l'embrayage de séparation (6) est prévu pour transmettre un couple en direction du moteur à combustion interne (1) lorsqu'un couple doit être transmis de la chaîne cinématique en direction du moteur à combustion interne (1).

13. Module hybride (4) selon l'une des revendications 1 à 12, dans lequel le palier central (16) et la roue libre (5) sont combinés axialement et/ou radialement pour former une unité de construction.

14. Module hybride (4) selon l'une des revendications 1 à 13, dans lequel le palier central (16) et la roue libre (5) sont emboîtés radialement ou agencés axialement adjacents.

15. Module hybride (4) selon la revendication 13 ou 14, dans lequel le palier central (16) et la roue libre (5) sont combinés radialement pour former une unité de construction de telle manière qu'une surface de roulement du palier central (16) et une surface de roulement de la roue libre (5) soient combinées pour former un composant.

16. Module hybride (4) selon l'une des revendications 1 à 15, dans lequel une bague intérieure (14) de la roue libre (5) assure simultanément la liaison avec le disque d'embrayage (21) ainsi qu'avec le vilebrequin (2) et une bague extérieure de la roue libre (5) est reliée à une entrée de la transmission ou dans lequel une bague intérieure (14) de la roue libre (5) est reliée à l'entrée de la transmission et une bague extérieure de la roue libre (5) assure simultanément la liaison avec le disque d'embrayage (21) ainsi qu'avec le vilebrequin (2).

17. Module hybride (4) selon l'une des revendications 1 à 16, dans lequel l'embrayage de séparation (6) est conçu fermé à l'état de base.

18. Procédé de transmission d'un couple dans une chaîne cinématique d'un véhicule automobile, comprenant les étapes de :
entraînement du véhicule automobile soit par un moteur à combustion interne (9), soit par un entraînement électrique (7,8), soit de façon combinée simultanément par les deux par transmission du couple provenant du moteur à combustion interne (1) en direction d'une transmission (9) via une roue libre (5) et/ou via un embrayage de séparation (6) ; et réglage d'une fraction du couple généré par le moteur à combustion interne (1) transmise par la roue libre (5) par le réglage d'un couple transmissible par l'embrayage de séparation (6),
**caractérisé par**
la fermeture partielle de l'embrayage de séparation (6), le couple transmis par la roue libre (5) étant réduit en fonction du couple transmissiblepar l'embrayage de séparation (6).
